(19) Europäisches Patentamt

European Patent Office

Office européen des brevets

(11) EP 1 582 968 A2

(12) EUROPEAN PATENT APPLICATION

(43) Date of publication:
05.10.2005 Bulletin 2005/40

(51) Int Cl.7: G06F 3/033

(21) Application number: 05006732.1

(22) Date of filing: 29.03.2005

(84) Designated Contracting States:
AT BE BG CH CY CZ DE DK EE ES FI FR GB GR
HU IE IS IT LI LT LU MC NL PL PT RO SE SI SK TR
Designated Extension States:
AL BA HR LV MK YU

(30) Priority: 29.03.2004 JP 2004094221

(71) Applicant: ALPS ELECTRIC CO., LTD.
Tokyo 145-8501 (JP)

(72) Inventor: Umeda, Yuichi
Ota-ku Tokyo 145-8501 (JP)

(74) Representative: Klunker . Schmitt-Nilson . Hirsch
Winzererstrasse 106
80797 München (DE)

(54) **Fingerprint sensor**

(57) The fingerprint sensor of the present invention is a two-dimensional area type fingerprint sensor where a plurality of rows and a plurality of columns cross each other, which includes a signal detecting means for outputting a detection signal in a two-dimensional detection surface; an X axis balance calculating means having an output difference of the X axis direction as numerator and having a sum of the total outputs of the X axis direction as denominator to obtain a balance output of the X axis direction with a center of the detection surface being a reference and the X axis direction being in line-symmetrical with the Y axis passing through the center; a Y axis balance calculating means having an output difference of the Y axis direction in line-symmetrical with the X axis passing through the center as numerator and having a sum of the total outputs of the Y axis direction as denominator to obtain a balance output of the Y axis direction; and a pointer movement control means for controlling speed and movement direction of the pointer from the balance outputs of the X and Y axis directions.

FIG. 1

**Description**

BACKGROUND OF THE INVENTION

1. Field of the Invention

The present invention relates to a fingerprint sensor having a function of moving or pointing a cursor or the like in a display screen of a computer.

2. Description of the Related Art

A fingerprint sensor which is the most favorable technology among biometrics is now being mounted in portable equipment such as a portable phone or the like.

Accordingly, it is required to add another function such as a pointing as well as fingerprint detection to the fingerprint sensor.

In the fingerprint sensor, a method of using a fingerprint pattern deformation as described below can be exemplified as the related art for implementing the pointing function (See Robotic Mechatronics Symposium held in May 23 (Friday) to 25 (Sunday), 2003 (Heisei 15) with a title of "the development of a new pointing device using fingerprint deformation" by Ikeda Atsutoshi (Nara Institute of Science and Technology), Kurita Yuichi (Nara Institute of Science and Technology), Ueda Jun (Nara Institute of Science and Technology), and Ogasawara Tsukasa (Nara Institute of Science and Technology)) (hereinafter referred to as Non-patent Document 1).

According to this method, the center of a fingerprint is estimated from the fingerprint image, and set as a reference point, and a sensor unit of the fingerprint sensor is divided into four regions based on the reference point, and a contact area of a finger in each region is smoothed, which is then subject to a filter processing and a binarization.

And balance outputs Sxt and Syt of the X direction and the Y direction at the time of a neutral state are obtained from the contact areas S1t to S4t of the finger at a certain time.

$$Sxt = (S1t+S2t) - (S3t+S4t) \tag{1}$$

$$Syt = (S2t+S3t) - (S1t+S4t) \tag{2}$$

Similarly, balance outputs Sxk and Syk are obtained after the finger is shifted in the surface of the fingerprint sensor, which are multiplied by proper coefficients Mx and My, so that movement amounts of the pointer $\Delta X$ and $\Delta Y$ are calculated by using the equations (3) and (4) below.

$$\Delta X=Mx(Sxk-Sxt) \tag{3}$$

$$\Delta Y=My(Syk-Syt) \tag{4}$$

The movement amounts of the pointer are obtained from the above-described equations (3) and (4), and each process such as a selection is performed on the display surface.

However, the above-described conventional pointing method has several problems as follows.

First, when a center position of a fingerprint is estimated, it is required to perform complicated calculations such as an extraction of the center of a fingerprint by using a so-called group delay spectrum (GDS) conversion technique in which fingerprint images are considered as waveforms of time series data, and a frequency spectrum is verified as an individual feature, and then the fingerprint center is extracted. Therefore, the calculating speed becomes slower or the circuit scale becomes bigger.

In addition, in an area type fingerprint sensor, it takes some time to detect fingerprints and transfer data for a single display screen, thereby the detection period of the cursor cannot be faster.

As described in Non-Patent Document 1, when the number of detected pixel is decreased in order to faster the detection speed, the information of fingerprint unevenness is lost, which causes it difficult to detect the fingerprint center in a safe manner, thereby the enhancement of the operating speed cannot be compatible with the safe detection of the fingerprint center.

Furthermore, from a viewpoint of the manipulation described in Non-Patent Document 1, it is necessary to retain the state in which the finger center is detected in a safe manner, thereby a user is required to perform a specific manipulation like contacting the finger with the detection surface and shifting the finger to deform the finger center in order to detect the finger center in a safe manner while the user puts his/her fingers on the sensor.

However, the finger is generally put in an inclined state to cause its area to be changed, or is slid in regardless of the finger center, so that the user not used to the manipulation may feel it difficult to implement the manipulation.

In addition, a neutral state in which the finger is not shifted is set to a reference state, however, it is difficult to automatically set the fingerprint center as the neutral state, and the user may feel it difficult to realize the neutral position, which causes a difficulty in intentionally stopping the pointer.

SUMMARY OF THE INVENTION

To solve these problems in the conventional method, it is an object of the present invention to provide a fingerprint sensor capable of enhancing a response speed and having a pointing function well suited for the manipulation.

The above object of the present invention is achieved by an aspect for a two-dimensional area type fingerprint sensor having a function of moving a pointer displayed on a display screen and having a plurality of rows and a plurality of columns crossed to each other, which includes: a signal detecting means for outputting a detection signal in a two-dimensional detection surface; an X axis balance calculating means having an output difference of the X axis direction as numerator and having a sum of the total outputs of the X axis direction as denominator to obtain a balance output of the X axis direction with a center of the detection surface being a reference and the X axis direction being in line-symmetrical with the Y axis passing through the center; a Y axis balance calculating means having an output difference of the Y axis direction in line-symmetrical with the X axis passing through the center as numerator and having a sum of the total outputs of the Y axis direction as denominator to obtain a balance output of the Y axis direction; and a pointer movement control means for controlling speed and movement direction of the pointer from the balance output of the X axis direction and the balance output of the Y axis direction.

Accordingly, the fingerprint sensor of the present invention only adds the level of the detected detection signal to determine where the center of the finger is put between both axes, and uses a calculation method which is simple and fast and does not rely on the detection of the fingerprint unevenness, so that movement direction and movement speed of the pointer may be obtained, which allows the pointing function of controlling the position of the pointer to be implemented based on the movement direction and the movement speed.

The fingerprint sensor of the present invention is characterized in that when the pointer movement control means detects that each balance output of the X and Y axis directions is equal to or smaller than a predetermined reference value, the pointer movement control means provides a dead zone of the pointer movement for outputting the movement speed corresponding to the balance output to zero.

Accordingly, the fingerprint of sensor the present invention has the finger positioned on the dead zone for the balance output, so that the manipulation of intentionally stopping the pointer may be readily carried out.

The fingerprint sensor of the present invention is characterized in that the pointer movement control means outputs the balance output of each of the X and Y axis directions by changing the movement speed corresponding to the threshold value in a stepwise manner with the plurality of threshold values being interface.

Accordingly, the fingerprint sensor of the present invention may convert the movement speed of the pointer to ones in a stepwise manner in the X and Y axis directions, so that the stability of the pointer manipulation may be maintained while the degree of freedom of the movement direction may be enhanced, which allows the user to readily move the pointer toward the desired direction so as to correspond to fast movement or slow movement or the like.

The fingerprint sensor of the present invention is characterized in that the pointer movement control means outputs the balance output of each of the X and Y axis directions by outputting the movement speed multiplied by a coefficient having different inclination value from each other and changing the pointer movement speed in a broken line shape with the plurality of threshold values being interface.

Accordingly, the fingerprint sensor of the present invention may convert the movement speed of the pointer to ones in a stepwise and inclined manner in the X and Y axis directions, so that the stability of the pointer manipulation may be maintained while the degree of freedom of the movement direction may be enhanced, which allows the user to readily move the pointer toward the desired direction so as to correspond to fast movement or slow movement or the like.

The fingerprint sensor of the present invention is characterized in that the X axis balance calculating means obtains the balance output of the X axis direction by multiplying the balance output by a predetermined weight in response to a distance of the X axis direction from the reference position, and the Y axis balance calculating means obtains the balance output of the Y axis direction by multiplying the balance output by a predetermined weight in response to a distance of the Y axis direction from the reference position.

Accordingly, the fingerprint sensor of the present invention may increase the sensitivity of the peripheral portion of the sensor to allow the pointer to be moved slow or fast only with a small movement of the finger, and may correspond to the movement speed intended by the user so that the easy manipulation may be implemented.

The fingerprint sensor of the present invention is characterized in that the pointer movement control means calculates the movement speed of the pointer by multiplying a predetermined decreasing rate by a smaller absolute value between the balance outputs of the X and Y axis directions to make the balance output smaller, and multiplying a predetermined increasing rate by a greater absolute value between the balance outputs of the X and Y axis directions to make the balance output greater.

Accordingly, the fingerprint sensor of the present invention may suppress the pointer from being moved in an inclined direction, so that the up and down pointer movement enabling the easy menu selection may be implemented when the menu is selected on the manipulation screen of the pointer.

The fingerprint sensor of the present invention is characterized in that each of the X and Y axis balance calculating means detects unevenness of the fingerprint, and differentiates a cross-sectional signal of a waveform of the detected unevenness to obtain a sum multiplied by itself of the differential value, and the pointer movement control means performs calculation on the movement speed of the pointer when the sum exceeds the threshold value.

Accordingly, the fingerprint sensor of the present invention performs the pointing processing after it detects whether the object in contact with the sensor surface is the finger or the extraneous matter using its resolution function, so that the abnormal processing due to the erroneous manipulation resulted from the extraneous matter in contact with the sensor surface may be prevented, and the manipulation which does not cause the stress may be provided to the user.

The fingerprint sensor of the present invention is characterized in that when the signal detecting means detects that the contact area of the finger is equal to or less than a predetermined threshold value, the pointer movement control means sets the movement speed to zero and fixes the position of the pointer.

Accordingly, the fingerprint sensor of the present invention does not perform the pointer operation when the finger is not sufficiently in contact with the sensor surface, so that the pointer movement may be prevented from unstable situation such as flickering in the state when the finger is not put on the sensor surface.

The fingerprint sensor of the present invention is characterized in that when the signal detecting means detects that the contact area of the finger is equal to or less than a predetermined threshold value, it determines that the finger is not put on the sensor unit and obtains it for a predetermined period to be stored as a reference value, and when the signal detecting means detects that the contact area of the finger exceeds the threshold value, it determines that the finger is put on the sensor unit and subtracts the reference value from the detected value to output it as a final detected value.

Accordingly, the fingerprint sensor of the present invention automatically corrects the offset value or the like and adjusts the feature changed due to aging of the sensor, so that the balance output close to its initial state may be always obtained, which allows the pointer movement to be implemented in a safe manner.

According to the fingerprint sensor of the present invention as described above, the level of the detection signal detected by the area type fingerprint sensor, and it is determined where the center of the finger (balance) is put between both axial directions of X and Y axes, so that movement direction and movement speed of the pointer may be obtained, and the pointer position may be controlled based on the movement direction and the movement speed by means of the calculation method which is simple and fast and does not rely on the detection of the fingerprint unevenness.

BRIEF DESCRIPTION OF THE DRAWINGS

FIG. 1 is a block view illustrating a configuration example of the fingerprint sensor according to the first embodiment;
FIG. 2 is a concept view explaining a structure of the sensor unit 1 in FIG. 1;
FIG. 3 is a concept view illustrating a matrix of capacity (condenser) between a row wiring line and a column wiring line of the area type sensor of FIG. 2;
FIG. 4 is a concept view explaining a method of calculating a balance output of the first embodiment;
FIG. 5 is a concept view explaining a method of calculating a balance output of the first embodiment;
FIG. 6 is a concept view explaining a method of calculating a balance output of the first embodiment;
FIG. 7 is a concept view explaining a method of calculating "movement speed detection at first stage" and "movement speed detection at second stage" from balance outputs to detect the movement speed of the pointer;
FIG. 8 is a concept view illustrating two-dimensional movement directions when the movement speed of the X axis direction are composed with that of the Y axis direction which are obtained by the "movement speed detection at second stage" of FIG. 7;
FIG. 9 is a concept view for explaining the movement speed detection of continuous values having dead zone;

FIG. 10 is a concept view for explaining the movement speed detection of continuous values having multi-stage inclination;

FIG. 11 is a flowchart illustrating operations of controlling on/off and regular offset compensation of the pointer by sensing the contact state of the finger;

FIG. 12 is a concept view for explaining a method of calculating balance outputs using a weight added value in accordance with the second embodiment;

FIG. 13 is a concept view for explaining a method of calculating balance outputs using a weight added value in accordance with the second embodiment;

FIG. 14 is a concept view for explaining a method of calculating balance outputs using a weight added value in accordance with the second embodiment;

FIG. 15 is a concept view for explaining a method of calculating movement speed for suppressing the pointer from being moved in the inclined direction in accordance with the third embodiment;

FIG. 16 is a concept view for explaining a method of calculating movement speed for suppressing the pointer from being moved in the inclined direction in accordance with the third embodiment;

FIG. 17 is a concept view for explaining a method of detecting whether an object in contact with the surface of the sensor unit 1 is a finger or an extraneous matter in accordance with the fourth embodiment; and

FIG. 18 is a concept view for explaining a method of detecting whether an object in contact with the surface of the sensor unit 1 is a finger or an extraneous matter in accordance with the fourth embodiment.

## DESCRIPTION OF THE PREFERRED EMBODIMENT

Hereinafter, a fingerprint sensor having a pointing function will be described with reference to the drawings in accordance with a first embodiment of the present invention.

<First embodiment>

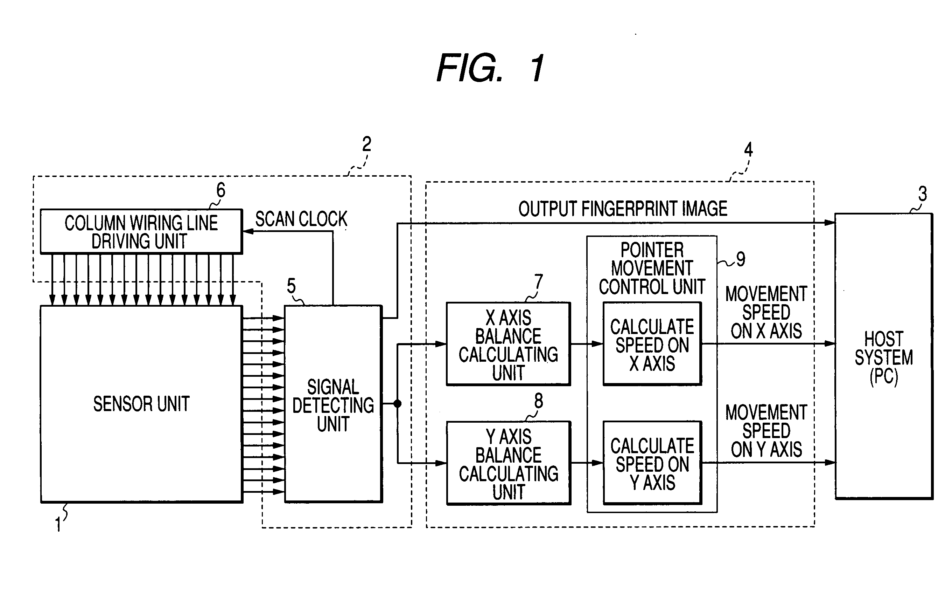

FIG. 1 is a block view illustrating a configuration example of the fingerprint sensor according to the first embodiment.

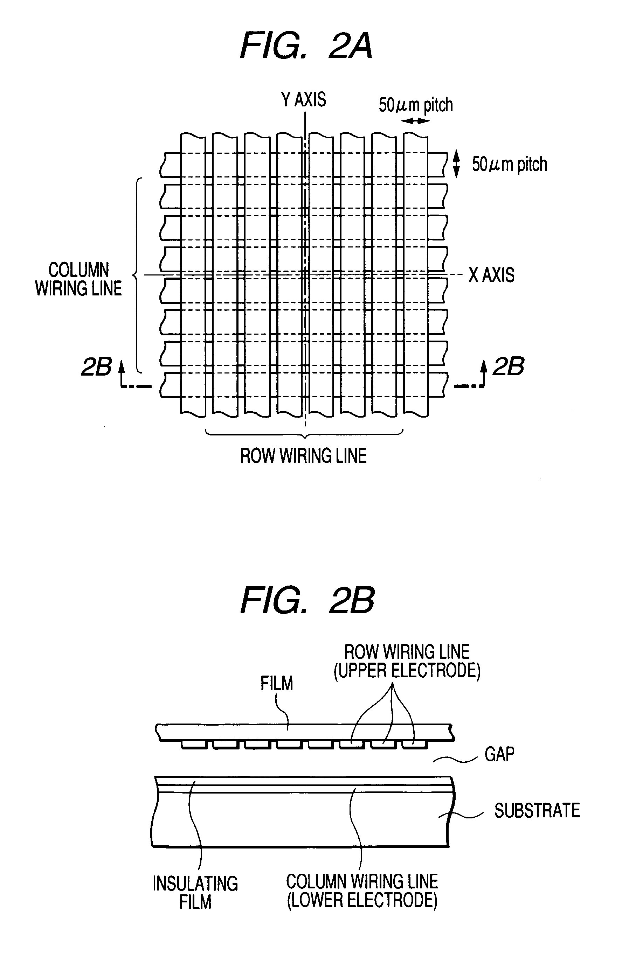

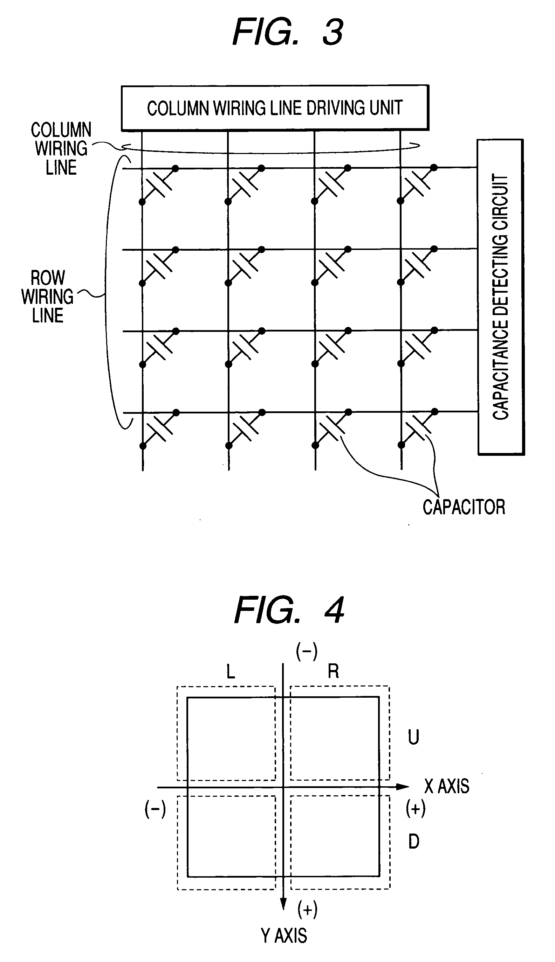

An area type fingerprint sensor as shown in FIG. 2 may be employed, for example, as the sensor used for the sensor unit 1 of FIG. 1, wherein a column wiring line is formed on a film and a row wiring line is correspondingly formed on a substrate, the column wiring line and the row wiring line are formed to correspond to each other with a gap being disposed therebetween (See FIG. 2B; cross-sectional view), and a capacitance of each intersection (See FIG. 2A; surface view) is detected. FIG. 3 shows an equivalent circuit of a capacitor formed at the intersection in a matrix of the column wiring line and the row wiring line of FIG. 2.

In this case, when a finger is put on the sensor unit 1, the film is deformed in response to the uneven shape of the fingerprint and a distance between the column wiring line and the row wiring line is changed, so that a two-dimensional capacitance change occurs, and the capacitance change is detected as an electrical signal by the capacitance detecting unit 2, which may be subjected to calculation by the host system 3 so that the fingerprint shape may be detected.

The capacitance detecting unit 2 is constituted by a signal detecting unit 5 and a column wiring line driving unit 6. The signal detecting unit 5 outputs a scan clock having a predetermined period to the column wiring line driving unit 6.

The column wiring line driving unit 6, in synchronization with this scan clock, selects any one column wiring line per scan clock of each column wiring line of the sensor unit 1, and outputs a column wiring line driving signal to the selected column wiring line.

The signal detecting unit 5 converts the capacitance of the condenser input per scan clock at the intersection between the row wiring line and the column wiring line which is selected to be driven from the amount of charges moved by the column wiring line driving signal to a detection signal of a voltage level corresponding to the charge amount, and outputs it to a host system 3 and a pointing processing unit 4 of the next stage.

In other words, in a case of the area type sensor shown in FIG. 2, the column wiring line driving unit 6 sequentially drives the column wiring lines, and the signal detecting unit 5 may obtain the detection signal corresponding to the capacitance of the intersection between the driven column wiring line and each of row wiring lines.

For example, when the sensor unit 1 is used as the fingerprint sensor, the detection signal is converted to a digital value of 8bit, which is transferred to the host system 3 in a time-series manner.

In the fingerprint sensor of the present embodiment, the detection signal converted to the digital value is output to the pointing processing unit 4 as described above when the point function is operated.

The pointing processing unit 4 is constituted by an X axis balance calculating unit 7, a Y axis balance calculating unit 8, and a pointer movement control unit 9.

The pointing control unit 4 has the input detection signal transferred to the X and Y balance calculating units 7 and 8, has calculation results obtained by the respective calculating units sequentially transferred to the pointer movement control unit 9, and has the amount of pointer movement detected by the pointer movement control unit 9 transferred to the host system 3.

Next, operations of the capacitance detecting circuit having the above-described configuration according to the first embodiment of the present invention will be described with reference to FIGS. 1 to 3.

The signal detecting unit 5 converts information about unevenness represented by the change of charges from the sensor unit 1 to a signal of voltage level per scan clock, and outputs it as the detection signal.

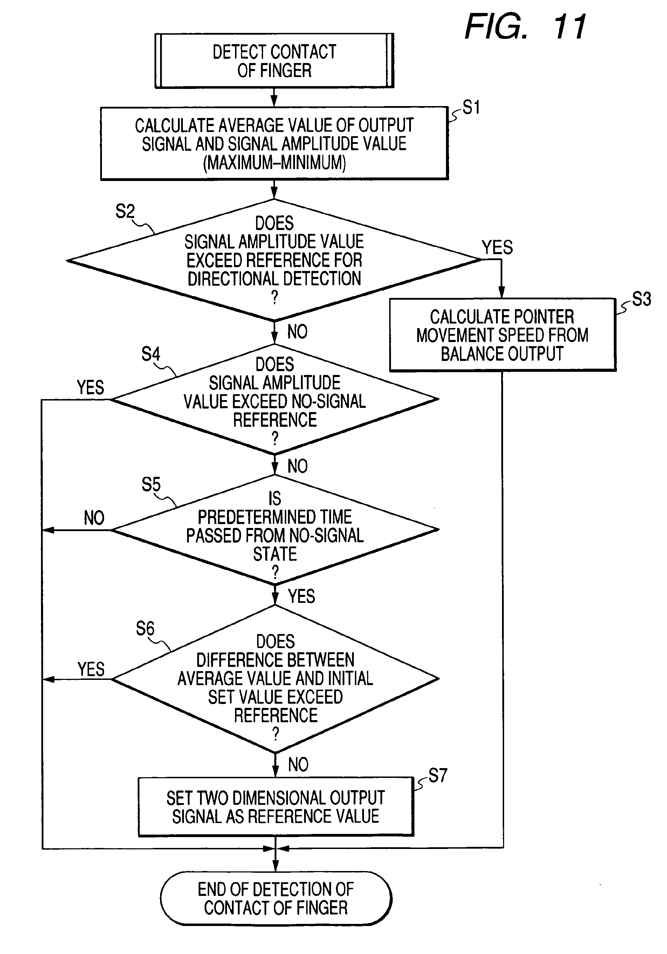

In this case, the detection signal output from the signal detecting unit 5 generally contains as an offset component a no-signal level of no-signal state in which the finger is not put on the sensor, and it is preferable to output the detection signal to the X and Y axis balance calculating units 7 and 8 as the signal having the amount changed from the no-signal state by subtracting the preset no-signal level or subtracting the offset component containing the no-signal level from the detection signal by means of an offset automatic correcting function to be described later (see operations of the flowchart of FIG. 11) in order to only obtain the signal level of the changed amount of capacitance.

In the X axis balance calculating unit 7, an area near the center of the sensor unit 1 is set as a reference point to define the X and Y axes (see FIG. 4), and the detection signal which is sequentially transferred is divided as positive direction (right direction +) data, a R component, and negative direction (right direction -) data, a L component, per column wiring line in the X direction with the Y axis being an interface therebetween. And the X axis balance calculating unit 7 sequentially accumulates the divided detection signal to an internal X axis balance memory and retains it.

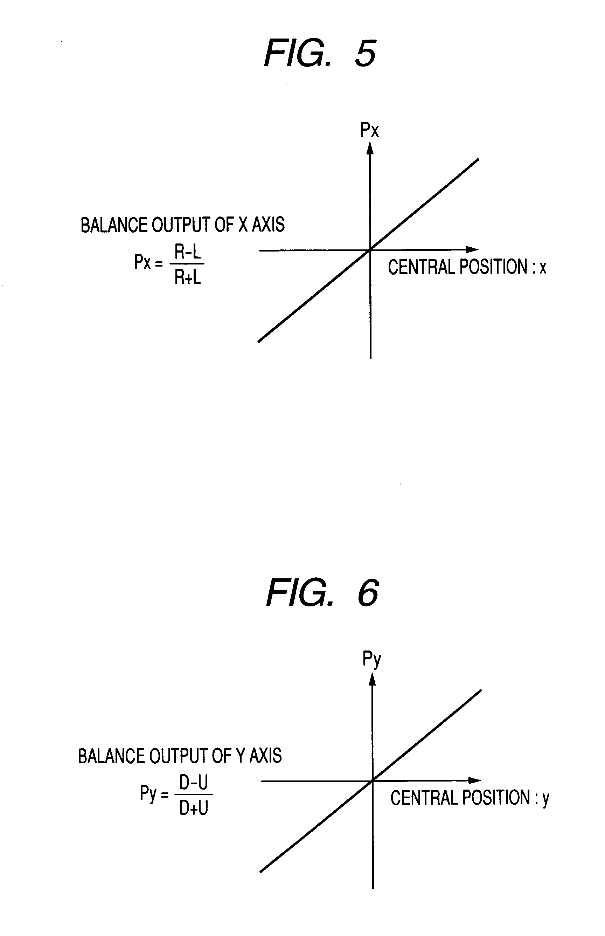

Next, the X axis balance calculating unit 7 may obtain data indicating the balance of X axis direction by calculating the balance output Px of X axis direction using the equation (5) below at the step where data corresponding to the screen portion of the sensor unit 1 of the fingerprint image are accumulated (see FIG. 5).

In addition, marks using the components divided into four quadrants in the related art are also represented. The present invention differs from the related art in that a center point of the fingerprint is fixed as the center of the sensor whereas it is detected to be set as the reference point in the related art, and in that only a difference calculation is carried out in the related art whereas the difference is divided by a sum of the total output values (that is, the sum of the total output values is a denominator) so that normalization is implemented.

$$Px= (R-L)/(R+L)$$

$$= \{(S1t+S2t)-(S3t+S4t)\}/(S1t+S2t+S3t+S4t) \qquad (5)$$

As is done with the X axis balance calculating unit 7, the Y axis balance calculating unit 8 may also obtain data indicating the balance of Y axis direction by sequentially dividing the detection signal transferred from the signal detecting unit 5 to D component having the positive direction signal (down; +) and U component having the negative direction signal (up; -) and accumulating them, and calculating the balance output Py of Y axis direction by means of the equation (6) below in the Y axis direction with the X axis being an interface therebetween (see FIG. 6).

According the above-described calculation, balance outputs of X and Y axes are independently calculated by the X and Y axis balance calculating units 7 and 8.

$$Py=(D-U)/(D+U)$$

$$=\{(S2t+S3t)-(S1t+S4t)\}/(S1t+S2t+S3t+S4t) \qquad (6)$$

Next, the point movement control unit 9 outputs the balance output Px of X axis from the X axis balance calculating unit 7 and the balance output Py of Y axis from the Y axis balance calculating unit 8, respectively, as a movement direction (any one between positive direction and negative direction per each axis) and a movement speed of the pointer based on a predetermined threshold value.

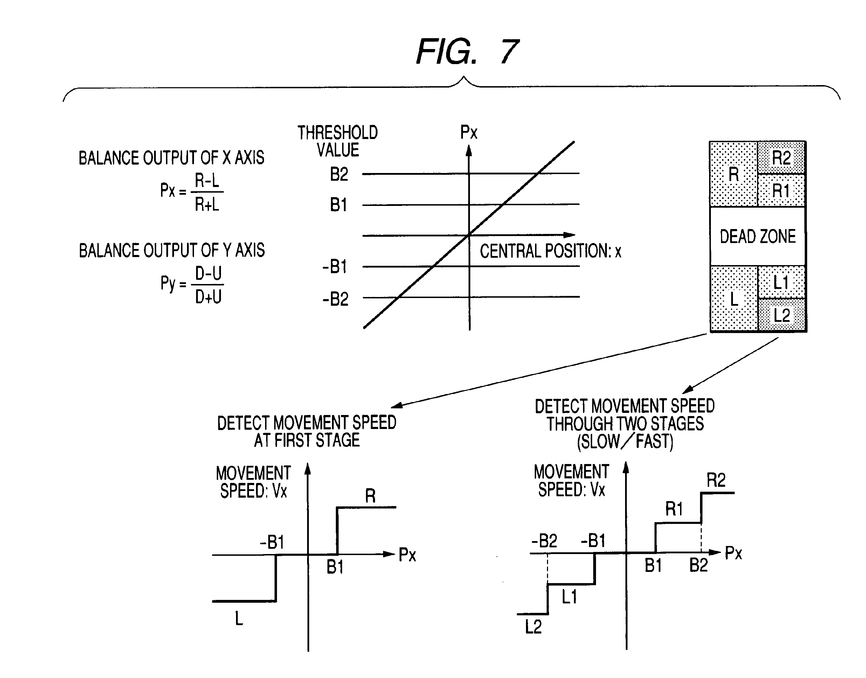

For example, the pointer movement control unit 9 compares the balance output Px and the threshold value B1 of X axis direction, and outputs the movement speed Vx1 of positive direction when the balance output Px of X axis direction exceeds the threshold value B1, and outputs the movement speed -Vx1 of negative direction when the balance output Px of X axis direction is smaller than the threshold value B1 in a method of calculating "movement speed at first stage" as shown in FIG. 7.

In addition, the pointer movement control unit 9 outputs the movement speed of X axis direction as zero "0" when the balance output Px is detected to be in a range between threshold values -B1 and B1. That is, the pointer movement control unit 9 performs an output operation such as a switch having a dead zone near the center of the value of the balance output. The above-described processing may be expressed as the equation (7) below.

$$Vx = +Vx1 \quad (Px>B1)$$

$$Vx = 0 \quad (-B1 \leq Px \leq B1) \qquad (7)$$

$$Vx = -Vx1 \quad (Px<-B1)$$

And the pointer movement control unit 9, as is done with the process of detecting the movement speed of X axis direction, compares the balance output Py with the threshold values B1 and -B1 in the Y axis direction, and outputs the movement speed Vy by calculating it of Y axis direction by means of the equation (8) below.

$$Vy = +Vy1 \quad (Py>B1)$$

$$Vy = 0 \quad (-B1 \leq Py \leq B1) \qquad (8)$$

$$Vy = -Vy1 \quad (Py<-B1)$$

Alternatively, in the method of calculating the movement speed in the pointer movement control unit 9, the threshold values are increased to four values of B1, B2, -B1, and -B2 for the calculating method of "detection of movement speed of first stage" in the calculating method of "detection of movement speed of two stages" of FIG. 7.
And the pointer movement control unit 9 outputs the speed of second stage Vx using the equation (9) below.

$$Vx = +Vx2 \quad (Px>B2)$$

$$Vx = +Vx1 \quad (B1<Px \leq B2)$$

$$Vx = 0 \quad (-B1 \leq Px \leq B1) \qquad (9)$$

$$Vx = -Vx1 \quad (-B2 \leq Px<-B1)$$

$$Vx = -Vx2 \quad (Px<-B2)$$

Similarly, the pointer movement control unit 9 outputs the speed of second stage Vy using the equation (10) below.

$$Vy = +Vy2 \quad (Py>B2)$$

$$Vy = +Vy1 \quad (B1<Py \leq B2)$$

$$Vx = 0 \quad (-B1 \leq Py \leq B1) \qquad (9)$$

$$Vy = -Vy1 \quad (-B2 \leq Py<-B1)$$

$$Vy = -Vy2 \quad (Py<-B2)$$

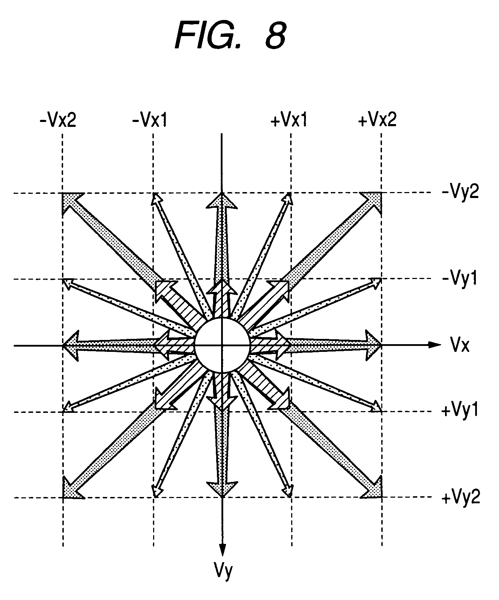

When the above-described movement speed is expressed to a two-dimensional movement direction of the pointer, movement direction and speed of the pointer are obtained which are determined by the vector composition of the movement speed as shown in FIG. 8, that is, the composition of the movement speeds (vectors) Vx and Vy.

A degree of freedom including eight directions having inclined directions may be obtained in the "detection of movement speed of first stage", while a degree of freedom having sixteen directions may be obtained in the "detection of movement speed of second stage" by means of combination of two kinds of movement speed.

In addition, a ratio between the threshold value of two kinds of B1 and B2 (or -B1 and -B2) and the speed calculated by the threshold value it not necessarily one to two, but may be properly set to be suited for an application of pointing processing.

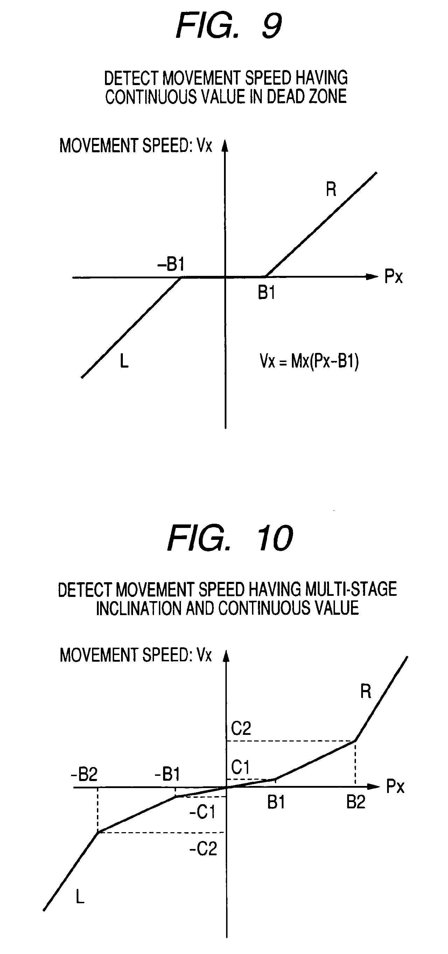

In addition, a calculating method of movement speed detection in the pointer movement control unit 9 is considered, which continuously increases the movement speed using the equations 11 and 12 below in a region having dead zones (-B1≤Px≤B1, -B1≤Py≤B1) in its central position and exceeding the threshold value as shown in FIG. 9.

$$Vx = Mx1(Px-B1) \ (Px>B1)$$

$$Vx = Mx1(Px+B1) \ (Px<-B1) \tag{11}$$

$$Vy = My1(Py-B1) \ (Py>B1)$$

$$Vy = My1(Py+B1) \ (Py<-B1) \tag{12}$$

wherein Mx1 and My1 are predetermined coefficients.

In addition, a calculating method of movement speed detection in the pointer movement control unit 9 is considered instead of setting the dead zone, which changes the change rate (inclination) of the movement speed to perform the calculation in a broken line manner using the equations 13 and 14 below with the threshold value being an interface as shown in FIG. 10.

$$Vx = Mx1 \times Px \ (-B1 \leq Px \leq B1)$$

$$Vx = Mx2 \times (Px-B1)+C1 \ (B1<Px \leq B2)$$

$$Vx = Mx3 \times (Px-B2)+C2 \ (B2<Px)$$

$$Vx = Mx2 \times (Px+B1)-C1 \ (-B2 \leq Px<B1)$$

$$Vx = Mx3 \times (Px+B2)-C2 \ (Px<-B2) \tag{13}$$

wherein Mx1, Mx2, Mx3, C1, and C2 are predetermined coefficients.

$$Vy = My1 \times Py \ (-B1 \leq Py \leq B1)$$

$$Vy = Mx2 \times (Py-B1)+C1 \ (B1<Py \leq B2)$$

$$Vy = Mx3 \times (Py-B2)+C2 \ (B2<Py)$$

$$Vy = Mx2 \times (Py+B1)-C1 \ (-B2 \leq Py<-B1)$$

$$Vy = Mx3 \times (Py+B2)-C2 \ (Py<-B2) \tag{14}$$

wherein Mx1, Mx2, Mx3, C1, and C2 are predetermined coefficients.

As described above, the movement direction of the pointer has no limitations because of the continuous change of the movement speed, so that the pointer may be freely moved.

In this case, the dead zones (see equations 11 and 12) near the central position or delayed regions of the movement speed (see equations 13 and 14) are provided, so that a fine manipulation of the pointer is also possible, which thus increases the manipulation on the screen.

That is, each of the coefficients has relationship like Mx1<Mx2<Mx and My1<My2<My3.

In addition, when the balance outputs Px and Py are calculated in the first embodiment of the present invention, the information itself about the unevenness of the fingerprint is not used.

Accordingly, the number of data of any one or both of the X axis and the Y axis (i.e. the sampling number of detection signal) may be reduced in the mode of performing the pointer manipulation in the first embodiment.

A method of reducing the number of data is considered which, in synchronization with the scan clock, uses detection signals input in a time-series manner as one signal based on a plurality of clock units to weed out the number of the detection signals or calculate the average of the detection signal per the number of clock of predetermined scan clocks in the respective X axis balance calculating unit 7 and the Y axis balance calculating unit 8.

As described above, when the number of data used to calculation for obtaining the balance output is reduced, a time required for detection per one screen may be decreased, and a time required for data transfer may be decreased because of the decreased amount of data, so that an update period of the pointer movement speed may be shortened.

In the typical area type sensor, it takes times of about 100ms for detection or transfer, which causes the pointing device to have a bad response in this state, however, the response feature of manipulation may be enhanced by reducing the number of data as described above.

In addition, a function of sensing a finger state in contact with the sensor unit 1 may be included in the first embodiment of the present invention.

For example, a flowchart as shown in FIG. 11 is considered. FIG. 11 shows a flowchart illustrating an example of sensing the finger state in contact with the sensor unit 1.

The signal detecting unit 5 obtains an average value of the detection signal (output signal) input from the sensor unit 1, and a signal amplitude value resulted from the maximum amplitude value subtracted by the minimum amplitude value of the detection signal in the one screen, respectively, whenever the output of the column wiring line driving signal with respect to the total column wiring lines is terminated in the sensor unit 1 (that is, whenever the detection per one screen is terminated) (Step S1).

The signal detecting unit 5 performs detection on whether the signal amplitude signal value exceeds the direction detecting reference value which is already set as the direction detection, and proceeds to Step S3 when it exceeds the reference value, and has a counter (not shown) initiate counting (i.e. counting of progressed time) when it does not exceed the reference value to proceed to Step S4 (Step S2). In this case, when the counter is already in operation, the X axis balance calculating unit 7 and the Y axis balance calculating unit 8 have the counting proceed and do not perform any operations on the timer.

And the X axis balance calculating unit 7, the Y axis balance calculating unit 8,and the pointer movement control unit 9 perform calculation on the respective movement speeds of X and Y axis directions using the above-described method (Step S3).

Meanwhile, in Step S2, when the signal amplitude value does not exceed the direction reference detection value, the pointer movement control unit 9 performs detection on whether the signal amplitude value exceeds the no-signal reference value defining the no-signal state, and terminates the processing when it detects that the signal amplitude value exceeds the no-signal reference value (offset value) which is already set, and proceeds to Step S5 when it detects that the signal amplitude value does not exceed the no-signal reference value (Step S4).

The pointer movement control unit 9 performs detection on whether the count number of the timer (progressed time) exceeds the number of no-signal reference count, and proceeds to Step S6 by resetting the counter when it detects that the count number exceeds the number of no-signal reference count, and terminates processing when it detects that the count number does not exceed the number of no-signal reference count (Step S5).

Next, the pointer movement control unit 9 compares the average value of the total detection signals in the current one screen with the number of no-signal reference count which is already set, and performs detection on whether a difference between the average value and the number of no-signal reference count exceeds the number of change reference count which is already set, and terminates processing when it detects that the difference exceeds the number of change reference count, and proceeds to Step S7 when it detects that the difference does not exceed the number of change reference count (Step S6).

And the pointer movement control unit 9 retains the two-dimensional output signal of the current one screen as offset correction data, and sets the average value of the total detection signals in the one screen as the new number of no-signal reference count (Step S7).

That is, when the finger is not put on the sensor, the signal level of the detection signal is low, so that the balance outputs Px and Py are changed due to an adjacent radiating noise or the like.

Accordingly, an offset value of the no-signal state is set, an amount of change is monitored from the no-signal state, and the detection is performed on how much the average value of the total sensor surface is greater than the offset value, so that the pointer may be fixed when the contact area of the finger is equal to or smaller than the predetermined threshold value, which may prevent flickering due to the noise or the like from occurring.

In addition, in the no-signal level that the finger is not completely in contact with the sensor unit as described above, a function of regularly updating the number of no-signal reference count, and automatically correcting the offset component using the offset correction data may be added.

The balance outputs Px and Py are preferably taken from the changed amount of the no-signal level, and it is expected that the calculation accuracy for the balance output be enhanced by removing the offset component.

In addition, the present invention does not require how to put the finger, that is, does not require determination of the neutral state or the like, and allows the pointer movement to be continuously manipulated even when the finger is off the sensor unit or put on the sensor again, and manipulation in the manual is not required even when the offset value is changed due to aging of the sensor.

<Second embodiment>

A fingerprint sensor according to the second embodiment will be described, however, which has the same configuration as that described in FIG. 1, and it differs from the first embodiment in a method of calculating movement speeds of the X axis balance calculating unit 7, the Y axis balance calculating unit 8, and the point movement control unit 9.

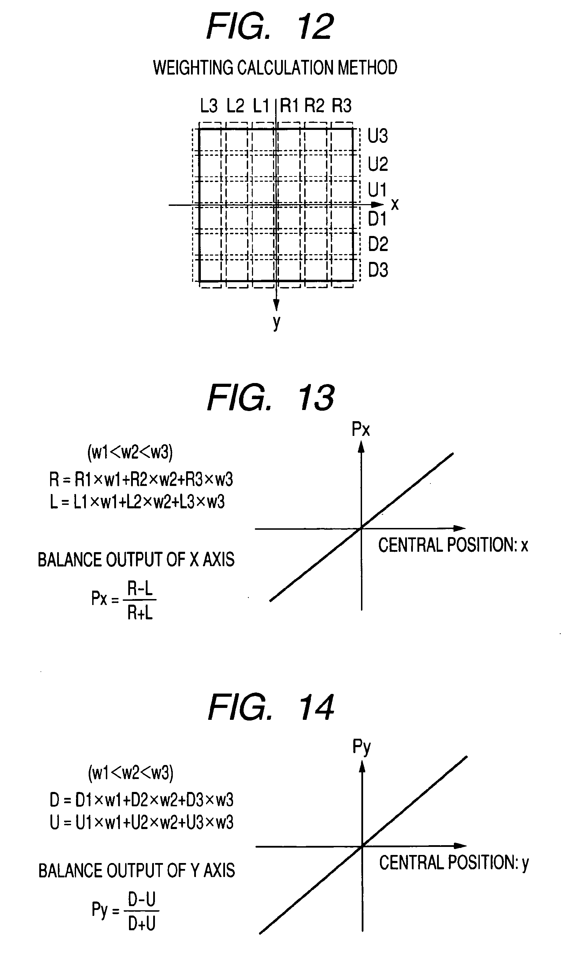

Hereinafter, the method of calculating movement speeds of the X axis balance calculating unit 7, the Y axis balance calculating unit 8, and the point movement control unit 9 will be described with reference to FIGS. 12 to 14 in accordance with the second embodiment.

The X axis balance calculating unit 7, when the balance output Px is calculated, divides the regions L and R of FIG. 4 into a plurality of blocks, respectively, and changes the weight (w1) for the sub blocks L1 and R1 at the central portion of the sensor unit 1, the weight (w3) for the sub blocks L3 and R3 at its peripheral portions, and the weight (w2) for the sub blocks L2 and R2 positioned between the sub block at the central portion and the sub block at the peripheral portion in the divided sub blocks L1, L2, L3 and the divided sub blocks R1, R2, and R3, and accumulates the changed weights in an internal memory, wherein w1 < w2 < w3.

The pointer movement control unit 9 then has the same calculation as the above-described calculation of the first embodiment of obtaining the movement speed using the balance outputs Px and Py as the accumulated results after it the data added with the weights of R components or L components are accumulated.

According to the above-described method, the weight near the central portion of the sensor unit 1 which does not directly contribute to the manipulation of the pointer movement is set lower relative to other regions, while the weights of the peripheral portions of the sensor unit 1 or the like are set higher, so that the pointer may be manipulated even with a small movement or shift of the finger.

In addition, the threshold value described in the first embodiment may be also adjusted, so that the manipulation may be adjusted such that the user feels it easy to manipulate the pointing device.

<Third embodiment>

The third embodiment, for example, assumes an application based on the movement of up and down of the pointer in the pointer processing corresponding to the scroll operation of image or the menu manipulation on the screen.

As is done with the first and second embodiments, in the method of independently processing the X axis and Y axis and combining the movement speeds of the obtained X and Y axis directions, it is apt to have the up and down balance (Y axis direction) out of balance to cause the inclined direction when the finger is shifted to move toward the traverse direction (x direction).

Accordingly, the X axis balance output Px is compared with the Y axis balance output Py, and a predetermined coefficient is multiplied to a smaller absolute value between these two outputs so that the balance output value is corrected to be smaller.

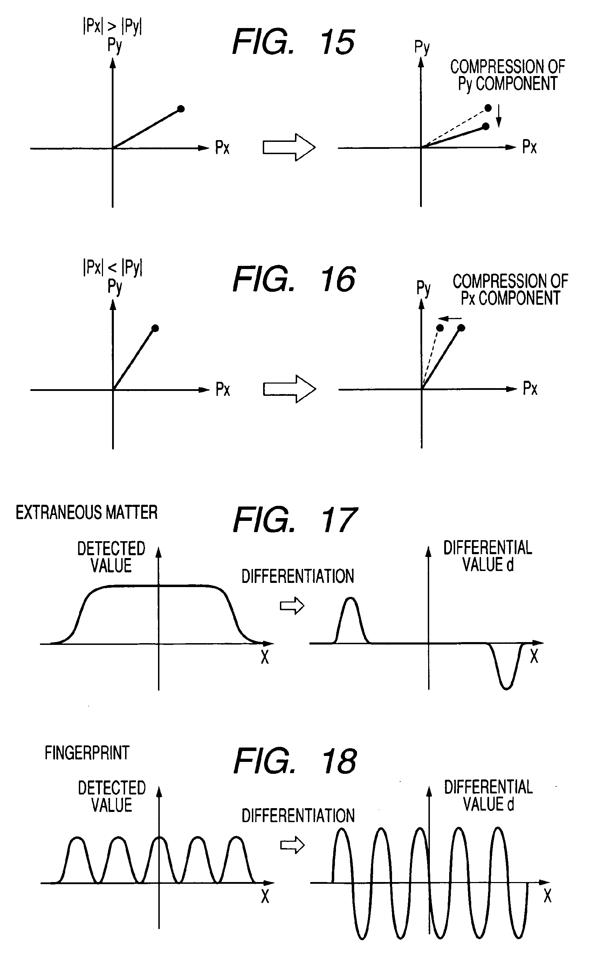

For example, the pointer movement control unit 9, when it detects Px > Py, adjusts the balance output so as to make the balance output mainly move toward the X axis direction by multiplying the coefficient S (S<1) by the balance output Py and making the movement speed Vy smaller than the movement speed Vx to cause the up and down balance to be decreased (see FIG. 15).

In addition, the pointer movement control unit 9, when it detects Py > Px, adjusts the balance output so as to make the balance output mainly move toward the Y axis direction by multiplying the coefficient S (S<1) by the balance output Px and making the movement speed Vx smaller than the movement speed Vy to cause the up and down balance to be decreased (see FIG. 16).

On the contrary, the balance output having the bigger absolute value therebetween may be made greater. That is, the pointer movement control unit 9, when it detects Px > Py, adjusts the balance output by multiplying the coefficient S (S>1) by the balance output Px to make the movement speed Vx increased and moving the up and down balance toward the X axis direction so as to emphasize the movement of the X axis direction.

By performing the above-described balance adjustment, even when the output is not balanced, the speed composition of FIG. 8 may allow the balance to be readily manipulated toward the up and down and right and left axial directions, which thus leads to stress alleviation for the user.

In addition, the threshold value for the balance output used in the pointer movement control unit 9 of the first embodiment may be properly set so that the movement may be implemented in an inclined direction.

<Fourth embodiment>

In the fourth embodiment, a function of determining whether an object in contact with a surface of the sensor unit 1 is a finger or an extraneous matter by using the fingerprint detecting function is added to the pointing processing for the fingerprint sensor of the first to third embodiments. This function is performed on the signal detecting unit 5, and a configuration of the fingerprint sensor is the same as that of the first embodiment shown in FIG. 1.

When an object is in contact with the sensor unit 1 before carrying out the pointing processing, cross-sectional signals of the row wiring line direction (X axis direction) are obtained as shown in FIGS. 17 and 18 when the row wiring line near the central portion of the sensor unit 1 is selected and a voltage level of a detection signal corresponding to the row wiring line which is inputted in a time-series manner in synchronization with the scan clock is plotted.

For example, as shown in FIG. 17, when the extraneous matter is in contact wit the surface of the sensor unit 1, the differential value d of the cross-sectional signal of the X axis direction is calculated to thereby obtain the increased differential value only near the extraneous matter.

Alternatively, as shown in FIG. 18, when the finger is in contact with the surface of the sensor unit 1, the differential value d of the cross-sectional signal of the X axis direction is calculated to thereby obtain the waveform (cross-sectional signal of the differential value) having a plurality of up and downs corresponding to the unevenness of the finger, and this differential value d is calculated to a positive or negative differential value over the total sensor surface in contact with the fingerprint.

Accordingly, the signal detecting unit 5 obtains the sum Sd multiplied by itself as expressed in the equation 15 below.

$$Sd=Sd*d \tag{15}$$

By means of the equation 15, the sum multiplied by itself Sd becomes increased when the sum Sd of the differential value d is large, that is, when the number of up and downs is large in the cross-sectional waveform of the differential value in regardless of the positive or negative differential value.

Accordingly, the signal detecting unit 5 determines whether the sum Sd has exceeded the preset threshold value, and determines that the object in contact with the surface of the sensor unit 1 is the finger and outputs a control signal for performing the signal processing to the pointing processing unit 4 when it detects that Sd exceeds the threshold value, and outputs the movement speed of the pointing obtained by using any one pointing processing described in the first to third embodiments.

Meanwhile, the signal detecting unit 5 does not output the control signal for performing the pointing processing to the pointing processing unit 4 when it detects that Sd does not exceed the threshold value, and the pointing processing unit 5 does not perform calculation on the movement speed.

The threshold value with respect to Sd is set such that Sd is first experimentally obtained in contact with the finger in a predetermined area over each of several persons in consideration of processing and an average of all values taken therefrom is multiplied by a predetermined value such as 80% of the average.

By means of the above-described processing, the signal detecting unit 5 does not have the pointing processing unit 4 perform the calculation of obtaining the movement speed of the pointer when the object in contact with the surface of the sensor unit 1 is the extraneous matter, while it may have the pointer processing unit 4 perform the movement speed of the pointer when the object in contact with the surface of the sensor unit 1 is the finger, so that an unnecessary calculation due to the contact of extraneous matter or the like is not performed in accordance with the fingerprint sensor of the present invention.

The fingerprint sensor of the present invention may prevent erroneous manipulation from occurring such as operations of the pointing function due to the contact with a book or notebook in a bag and removal of essential data or overwriting data in cases.

In addition, the differential value of data of the X axis direction is calculated to detect whether the object in contact with the surface of the sensor 1 is the extraneous matter of the finger in the above-described fourth embodiment, however, the differential value of the detection signal (detection signal corresponding to any one column wiring line) of the Y axis direction may also be detected in a similar way to detect whether it is the extraneous matter or the finger using the equation 16 below, a sum of the sum multiplied by itself of the X axis and the sum multiplied by itself of the Y axis.

In addition, the signal detecting unit 5 may obtain detection signals from the whole condensers of the sensor unit 1, respectively and perform outline detection using the technique related to the image filter to detect whether it is the finger.

$$Sd=(Sdx*dx) + (Sdy*dy) \tag{16}$$

dx: differential value of the cross-sectional waveform of the X axis direction
dy: differential value of the cross-sectional waveform of the Y axis direction

In addition, a program for implementing the function of the pointing processing unit 4 of FIG. 1 may be recorded in a computer readable recording medium, and the program recorded in the recording medium may be read into a computer system and then executed to perform the pointing processing. In addition, the computer system herein includes a world wide web (WWW) system having an environment providing a homepage (or a display environment). In addition, the computer readable recording medium includes a storage device such as portable media like a flexible disk, a magneto-optical disk, a ROM, a CD-ROM, and a hard disk or the like built in the computer system. In addition, the computer readable recording medium includes ones retaining the program for a predetermined time such as a volatile memory (RAM) within the computer system which becomes a server or a client when the program is transferred via a communication line such as a telephone line or a network such as the Internet

In addition, the program may be transferred from the computer system which has stored the program to other computer system via a transfer medium or a transfer wave of the transfer medium. In this case, the transfer medium which transfers the program is one which has a function of transferring information such as a network (communication network) like the Internet or a communication link (communication line) like a telephone line. In addition, the program may be one for implementing some of the above-described functions. Alternatively, it may be one implemented by combination of the above-described function with the program already stored in the computer system, so called a differential file (i.e. differential program).

## Claims

1.  A two-dimensional area type fingerprint sensor having a function of moving a pointer displayed on a display screen and having a plurality of rows and a plurality of columns crossed to each other, comprising:

    a signal detecting means for outputting a detection signal in a two-dimensional detection surface;
    an X axis balance calculating means having an output difference of the X axis direction as numerator and having a sum of the total outputs of the X axis direction as denominator to obtain a balance output of the X axis direction with a center of the detection surface being a reference and the X axis direction being in line-symmetrical with the Y axis passing through the center;
    a Y axis balance calculating means having an output difference of the Y axis direction in line-symmetrical with the X axis passing through the center as numerator and having a sum of the total outputs of the Y axis direction as denominator to obtain a balance output of the Y axis direction; and
    a pointer movement control means for controlling speed and movement direction of the pointer from the balance output of the X axis direction and the balance output of the Y axis direction.

2.  The fingerprint sensor according to claim 1,
    wherein when the pointer movement control means detects that each balance output of the X and Y axis directions is equal to or smaller than a predetermined reference value, the pointer movement control means provides a dead zone of the pointer movement for outputting the movement speed corresponding to the balance output to zero.

3.  The fingerprint sensor according to claim 1 or 2,
    wherein the pointer movement control means outputs the balance output of each of the X and Y axis directions by changing the movement speed corresponding to the threshold value in a stepwise manner with the plurality of threshold values being interface.

4.  The fingerprint sensor according to any of claims 1 to 3,
    wherein the pointer movement control means outputs the balance output of each of the X and Y axis directions by outputting the movement speed multiplied by a coefficient having different inclination value from each other and changing the pointer movement speed in a broken line shape with the plurality of threshold values being interface.

**5.** The fingerprint sensor according to any of claims 1 to 4,

wherein the X axis balance calculating means obtains the balance output of the X axis direction by multiplying the balance output by a predetermined weight in response to a distance of the X axis direction from the reference position, and the Y axis balance calculating means obtains the balance output of the Y axis direction by multiplying the balance output by a predetermined weight in response to a distance of the Y axis direction from the reference position.

**6.** The fingerprint sensor according any of claims 1 to 5,

wherein the pointer movement control means calculates the movement speed of the pointer by multiplying a predetermined decreasing rate by a smaller absolute value between the balance outputs of the X and Y axis directions to make the balance output smaller, and multiplying a predetermined increasing rate by a greater absolute value between the balance outputs of the X and Y axis directions to make the balance output greater.

**7.** The fingerprint sensor according to any one of claims 1 to 6,

wherein each of the X and Y axis balance calculating means detects unevenness of the fingerprint, and differentiates a cross-sectional signal of a waveform of the detected unevenness to obtain a sum multiplied by itself of the differential value, and the pointer movement control means performs calculation on the movement speed of the pointer when the sum exceeds the threshold value.

**8.** The fingerprint sensor according to any one of claims 1 to 7,

wherein when the signal detecting means detects that the contact area of the finger is equal to or less than a predetermined threshold value, the pointer movement control means sets the movement speed to zero and fixes the position of the pointer.

**9.** The fingerprint sensor according to any one of claims 1 to 8,

wherein when the signal detecting means detects that the contact area of the finger is equal to or less than a predetermined threshold value, it determines that the finger is not put on the sensor unit and obtains it for a predetermined period to be stored as a reference value, and when the signal detecting means detects that the contact area of the finger exceeds the threshold value, it determines that the finger is put on the sensor unit and subtracts the reference value from the detected value to output it as a final detected value.

## FIG. 1

COLUMN WIRING LINE DRIVING UNIT — 6

SCAN CLOCK

SENSOR UNIT — 1

SIGNAL DETECTING UNIT — 5

OUTPUT FINGERPRINT IMAGE

X AXIS BALANCE CALCULATING UNIT — 7

Y AXIS BALANCE CALCULATING UNIT — 8

POINTER MOVEMENT CONTROL UNIT — 9

CALCULATE SPEED ON X AXIS

CALCULATE SPEED ON Y AXIS

MOVEMENT SPEED ON X AXIS

MOVEMENT SPEED ON Y AXIS

HOST SYSTEM (PC) — 3

2

4

EP 1 582 968 A2

# FIG. 2A

Y AXIS  50μm pitch

50μm pitch

COLUMN WIRING LINE

X AXIS

2B  2B

ROW WIRING LINE

# FIG. 2B

ROW WIRING LINE (UPPER ELECTRODE)

FILM

GAP

SUBSTRATE

INSULATING FILM

COLUMN WIRING LINE (LOWER ELECTRODE)

# FIG. 3

COLUMN WIRING LINE DRIVING UNIT

COLUMN WIRING LINE

ROW WIRING LINE

CAPACITANCE DETECTING CIRCUIT

CAPACITOR

# FIG. 4

(−)

L          R

U

X AXIS

(−)          (+)

D

(+)

Y AXIS

# FIG. 5

BALANCE OUTPUT OF X AXIS

$$Px = \frac{R-L}{R+L}$$

Px

CENTRAL POSITION : x

# FIG. 6

BALANCE OUTPUT OF Y AXIS

$$Py = \frac{D-U}{D+U}$$

Py

CENTRAL POSITION : y

# FIG. 7

BALANCE OUTPUT OF X AXIS

$$Px = \frac{R-L}{R+L}$$

BALANCE OUTPUT OF Y AXIS

$$Py = \frac{D-U}{D+U}$$

THRESHOLD VALUE

B2

B1

-B1

-B2

Px

CENTRAL POSITION: x

R2

R

R1

DEAD ZONE

L1

L

L2

DETECT MOVEMENT SPEED
AT FIRST STAGE

MOVEMENT SPEED: Vx

R

-B1

B1

Px

L

DETECT MOVEMENT SPEED
THROUGH TWO STAGES
(SLOW / FAST)

MOVEMENT SPEED: Vx

R2

R1

-B2    -B1

B1    B2

Px

L1

L2

EP 1 582 968 A2

# FIG. 8

# *FIG. 9*

DETECT MOVEMENT SPEED HAVING
CONTINUOUS VALUE IN DEAD ZONE

MOVEMENT SPEED: Vx

R

−B1

B1

Px

L

$Vx = Mx(Px-B1)$

# *FIG. 10*

DETECT MOVEMENT SPEED HAVING MULTI-STAGE
INCLINATION AND CONTINUOUS VALUE

MOVEMENT SPEED: Vx

R

C2

C1

-B2    -B1

B1    B2    Px

-C1

-C2

L

20

*FIG. 11*

```
┌─────────────────────────┐
│      DETECT CONTACT      │
│        OF FINGER         │
└─────────────────────────┘
             │
             ▼
┌─────────────────────────┐ ⌐S1
│ CALCULATE AVERAGE VALUE OF OUTPUT │
│  SIGNAL AND SIGNAL AMPLITUDE VALUE │
│      (MAXIMUM−MINIMUM)    │
└─────────────────────────┘
             │
             ▼
          ╱╲
  S2    ╱    ╲        DOES
      ╱  SIGNAL AMPLITUDE VALUE  ╲    YES
     ╱   EXCEED REFERENCE FOR     ╲─────────┐
      ╲   DIRECTIONAL DETECTION  ╱          │
        ╲        ?             ╱            ▼
          ╲    ╱                  ┌──────────────────┐ ⌐S3
           │ NO                   │ CALCULATE POINTER │
           ▼                      │ MOVEMENT SPEED FROM│
          ╱╲                      │  BALANCE OUTPUT    │
  S4    ╱    ╲       DOES         └──────────────────┘
  YES ╱  SIGNAL AMPLITUDE  ╲
  ┌──╱   VALUE EXCEED NO-SIGNAL  ╲
  │   ╲     REFERENCE          ╱
  │     ╲      ?             ╱
  │       ╲    ╱
  │        │ NO
  │        ▼
  │       ╱╲
  │ S5  ╱    ╲        IS
  │ NO ╱ PREDETERMINED TIME ╲
  ◄──╱  PASSED FROM NO-SIGNAL ╲
  │   ╲     STATE           ╱
  │     ╲     ?           ╱
  │       ╲    ╱
  │        │ YES
  │        ▼
  │       ╱╲
  │ S6  ╱    ╲       DOES
  │ YES╱ DIFFERENCE BETWEEN ╲
  ◄──╱ AVERAGE VALUE AND INITIAL ╲
  │   ╲  SET VALUE EXCEED      ╱
  │     ╲  REFERENCE         ╱
  │       ╲    ?           ╱
  │        │ NO
  │        ▼
  │ ┌──────────────────┐ ⌐S7
  │ │ SET TWO DIMENSIONAL OUTPUT │
  │ │ SIGNAL AS REFERENCE VALUE  │
  │ └──────────────────┘
  │        │
  └────────┤
           ▼
     ╭──────────────────╮
     │  END OF DETECTION OF │
     │   CONTACT OF FINGER  │
     ╰──────────────────╯
```

21

# FIG. 12

## WEIGHTING CALCULATION METHOD

# FIG. 13

$(w1 < w2 < w3)$

$R = R1 \times w1 + R2 \times w2 + R3 \times w3$

$L = L1 \times w1 + L2 \times w2 + L3 \times w3$

BALANCE OUTPUT OF X AXIS

$$Px = \frac{R-L}{R+L}$$

# FIG. 14

$(w1 < w2 < w3)$

$D = D1 \times w1 + D2 \times w2 + D3 \times w3$

$U = U1 \times w1 + U2 \times w2 + U3 \times w3$

BALANCE OUTPUT OF Y AXIS

$$Py = \frac{D-U}{D+U}$$

EP 1 582 968 A2

$|Px| > |Py|$

Py

# FIG. 15

Px

Py

COMPRESSION OF
Py COMPONENT

Px

$|Px| < |Py|$

Py

# FIG. 16

Px

Py

COMPRESSION OF
Px COMPONENT

Px

EXTRANEOUS MATTER

# FIG. 17

DETECTED
VALUE

DIFFERENTIATION

DIFFERENTIAL
VALUE d

X

X

FINGERPRINT

# FIG. 18

DETECTED
VALUE

DIFFERENTIATION

DIFFERENTIAL
VALUE d

X

X